# EUROPEAN PATENT SPECIFICATION

(11) **EP 2 590 516 B1**
(45) Date of publication and mention of the grant of the patent: **29.11.2017**
(21) Application number: 11804214.2
(22) Date of filing: 30.06.2011
(51) Int. Cl.: A23G 3/36, A23G 3/42, A23G 3/44, A23G 3/48, A23G 4/14, A23G 4/06, A23G 4/10, A23G 4/08

(54) **CONFECTION WITH GELATIN-POLYPHENOL COMPLEX**
SÜSSIGKEIT MIT EINEM GELATINE-POLYPHENOL-KOMPLEX
CONFISERIE COMPRENANT UN COMPLEXE DE GÉLATINE AVEC POLYPHÉNOL

(30) Priority: 08.07.2010 US 362486 P
(43) Date of publication of application: 15.05.2013
(73) Proprietor: Wm. Wrigley Jr. Company, Chicago, IL 60611 (US)
(72) Inventor: MO, Xiaoqun, Oak Park, Illinois 60301 (US); LIU, Jingping, Indian Head Park Illinois 60525 (US); TIAN, Minmin, Naperville Illinois 60564 (US); HASSLER, Julie, Chicago, Illinois 60614 (US); GREENBERG, Michael J., Northbrook Illinois 60062 (US)
(74) Representative: Campbell, Neil Boyd
(86) International application number: PCT/US2011/042635
(87) International publication number: WO 2012/006215

(56) References cited:
- WO-A1-2005/092112
- WO-A1-2012/006218
- JP-A- 2000 189 060
- JP-A- 2000 189 060
- JP-A- 2007 089 579
- US-A- 3 255 018
- US-A1- 2010 119 664
- STRAUSS ET AL.: 'Plant phenolics as cross-linkers of gelatin gels and gelatin-based coacervates for use as food ingredients.' FOOD HYDROCOLLOIDS vol. 18, no. 1, January 2004, pages 81 - 89, XP027125155

## Description

### BACKGROUND OF THE INVENTION

The present invention relates to a chewy confectionary product. More specifically, this invention relates to improved formulations for chewy confectionary product containing a gel matrix and a bulking agent. Preferably, the gel matrix is a polyphenol and gelatin complex, which is blended with a bulking agent and has an elastic texture and can be chewed for 2 to 40 minutes before the confectionary product disintegrates during chewing under mouth conditions.

Consumers like chewy confections, including chewing gum, gummies and chewy grained confections. Chewing keeps consumers alert, freshens their breath, aids in mouth moistening, and extends delivery time of flavors, sweeteners, sensates, and active ingredients. Though consumers like the elastic texture and long chewing time of chewing gum, consumers know that typical chewing gum contains an elastic material that remains in the mouth after the bulking agent is solubilized and swallowed. That remaining material (i.e., "gum cud") is not designed to be swallowed. The elastic material in typical chewing gum is not edible under U.S. Federal Regulations and is not digestible. Some consumers find it inconvenient to remove the gum cud from their mouth for disposal.

Of non-chewing gum confections, typical gummies and chewy grained confections contain a material that will create a gel matrix within the confectionary product. The gel matrix gives the confectionary product some elastic texture during chewing and is digestible and edible. Gummies and chewy grained confections with a typical gel matrix can be chewed for only up to a minute before they totally disintegrate during chewing under mouth conditions.

WO 2005/092112A1 and JP2000189060 A both disclose non-disintegrating chewing gums comprising polyphenol-gelatin complexes obtained by precipitation after mixing aqueous solutions of polyphenol and gelatin.

JP2007089579 A discloses a disintegrating chewing gum comprising a polyphenol-gelatin complex obtained by the same method, using xylitol as bulking agent.

The problem is how to create a confectionary product so that the confectionary product can be chewed longer than a typical gummi or chewy grained confection, and yet the confectionary product will disintegrate during chewing so that there is no remaining material left in the mouth to be disposed of. Additionally, all of the ingredients in the confection must be digestible and edible under appropriate laws and regulations.

The solution is a confection with a polyphenol-gelatin complex containing water, having a polyphenol to gelatin weight ratio of 0.2:1 to 0.8:1, a suitable bulking agent such as erythritol, mannitol, hydrocolloid gum, pectin, inulin, protein, protein salt and combinations thereof, wherein the polyphenol and gelatin complex is made by mixing dry gelatin with a polyphenol and water solution and wherein the confection disintegrates during chewing under mouth conditions in 2 to 40 minutes.

### SUMMARY OF THE INVENTION

A confectionary product containing a polyphenol-gelatin complex containing water has a polyphenol to gelatin weight ratio of 0.2:1 to 0.8:1 and a suitable bulking agent such as erythritol, mannitol, hydrocolloid gums, modified starch, pectin, inulin, protein, protein salt, and combinations thereof; wherein the polyphenol and gelatin complex is made by mixing dry gelatin with a polyphenol and water solution; and wherein the confection disintegrates during chewing under mouth conditions in 2 to 40 minutes.

### DETAILED DESCRIPTION OF THE INVENTION

The present invention relates to a chewy confectionary product. More specifically, this invention relates to improved formulations for chewy confectionary products, which contain a gel matrix and a suitable bulking agent, that can be chewed for a longer time than typical gummies and chewy grained confections before disintegrating under mouth conditions. The present invention is a confectionary product comprising a gel matrix that is a polyphenol and gelatin complex in a ratio of 0.2:1 to 0.8:1 polyphenol to gelatin by weight, which is blended with a bulking agent, wherein the polyphenol and gelatin complex is made by mixing dry gelatin with a polyphenol and water solution; and wherein the resulting confectionary product has an elastic texture and can be chewed for 2 to 40 minutes before the confectionary product disintegrates during chewing under mouth conditions. The bulking agent is selected from erythritol, mannitol, hydrocolloid gums, pectin, inulin, milk protein, milk protein salt, and combination thereof.

Typically, confectionary products, such as gummies and chewy grained confections, contain a gelling agent that creates a gel matrix in the confectionary product. The gel matrix gives the confectionary product some elastic texture. The gelling agent creates throughout the confectionary product a matrix of loosely connected strands. The length of the strands and the connections between the strands, along with the flexibility of the resulting matrix, dictate the elastic texture of the confectionary product during chewing. By elastic texture, it is meant that the confectionary product has some give and stretch before breaking when being chewed. An elastic texture gives a confectionary product resistance to being cut up into small pieces during chewing. Also, a typical confectionary product gelling agent creates a matrix that is soluble, which hastens the loss of the confectionary product's elastic texture during chewing.

The problem is how to create a confectionary product so that the confectionary product can be chewed longer than a typical gummi or chewy grained confection, and yet the confectionary product will eventually disintegrate during chewing so that there is no remaining material left in the mouth to be disposed of. Additionally, all of the ingredients in the confectionary product must be digestible and edible under U.S. Federal Regulations. In other words, the problem is creating a totally edible, elastic textured confectionary product that can be chewed for 2 to 40 minutes before disintegrating under mouth conditions..

The solution is a confectionary product, where the gel matrix in the confectionary product is composed of gelatin complexed with polyphenol, wherein the polyphenol and gelatin complex is made by mixing dry gelatin with a polyphenol and water solution and where any additional product ingredients do not inhibit the complex's ability to form a homogeneous mass when mixed with additional ingredients, and yet the resulting confectionary product disintegrates in 2 to 40 minutes of chewing.

Gelatin is often used as the gel matrix material in gummies and chewy confectionary products. Gelatin is classified as a foodstuff, with E number E441, and is totally edible and digestible according to U.S. Federal Regulations. Gelatin can be found not only in confectionary products, but also in other food products that need an elastic component, such as marshmallows and gelatin dessert. Gelatin is a protein that is an irreversibly hydrolyzed form of collagen, which is extracted from animal bones, connective tissue, organs, and intestines of such as from cattle, pigs, and horses. The natural molecular bonds between individual collagen strands are broken down during hydrolysis into a form that rearranges more easily. Together with water, gelatin forms a semi-solid matrix (I.e., gel) trapping water within its matrix structure. Typically, gelatin gels exist over only a small temperature range, the upper limit being the melting point of the gel. At higher temperatures, the gelatin structure can be damaged and become insoluble and inflexible.

Gelatin containing confections are often composed of 3 - 12 % gelatin, 15 - 25% water, 35 - 45% sugar, 30 - 35% corn syrup (43 D.E.), 1 - 2% acid and less than 1% flavor and color. A typical gummi manufacturing process is to hydrate the gelatin, combine the hydrated gelatin with the other confection ingredients (except flavor and color), and cook in a closed cooker at about 121 °C at 20 inches of vacuum. The hot mixture is then flashed in a vacuum chamber continuously cooling to about 77 °C F. Color and flavor are added to the cooked mass, which is then deposited into dry starch molds. After holding the deposited confection for 24 hours at 32 °C or less, the confection pieces are roughly 80% solids. The purpose of the starch molds is to create the shape of the confection piece, and to remove some water from the cooked solution.

Chewy grained confections have similar gelatin levels to that of gummies, though more sugar and less corn syrup are usually used in order to create a grained (i.e., containing sugar crystals) confection. The difference in solids also effects how the cooked syrup is formed into final confection pieces. Chewy grained confections have a higher solids (i.e., lower water content) than gummies, and are not deposited into starch molds, but are usually extruded or batch rolled and then cut into pieces. Also chewy grained confections are often pulled in order to give a more aerated texture and opaque appearance.

Typically, in both gummi and chewy grained confection manufacturing flavors in concentrate, extract, or chemical form are added to the batch during the last steps of the manufacturing process so as to not damage the flavor components by heat and so as to not flash off the flavor by vacuum or atmospheric evaporation. A confectioner does not expect the flavor ingredient to affect the other ingredients in a confection.

In recent years, efforts have been made to decrease the speed of gelatin based confectionary products dissolving during chewing. One change was the use of gelatin with greater Bloom. Bloom is a test to measure the strength of a gelatin gel. The test was originally developed in 1925 and is still used today to classify gelatin samples as to their ability to make a strong gel. The test determines the weight needed by a probe to deflect the surface of a gelatin gel of 4 mm without breaking it. The larger the Bloom number, the more weight needed to deflect the gel. Bloom can range from 30 to 350. Typically gummi and chewy grained confections use 200 - 250 bloom. Gelatin with higher Bloom usually create gel matrixes that are more rigid and hard (i.e., not elastic), which makes them slightly slower in dissolving because it takes more chewing to physically break the confectionary product into smaller pieces. Consumers usually find the harder, less soluble result of confections made with gelatin with high Bloom objectionable, and the resulting chewing time is still less than one minute. Gummi and chewy grained confections made with gelatin of less than 200 Bloom are soft and dissolve faster in the mouth than confections made with gelatin with greater than 200 Bloom. Though gelatin with 275 Bloom was chosen for the following illustrating examples, the invention is not limited to 275 Bloom.

Polyphenols are a group of chemical substances found in plants, characterized by the presence of more than one phenol unit, the basic building block. The division of polyphenols into tannins, lignins, and flavonoids is derived from the variety of simple polyphenolic units. The largest and best studied polyphenols are the flavonoids, which include several compounds, among them the catechins, anthocyanidins and isoflavonoids. A concentrated source of polyphenol can be found in green tea extracts and fruit extracts. EGCG (i.e. epigallocatechin gallate) is a type of catechin. EGCG is the most abundant catechin, is found in green tea and other plants, and is also a potent antioxidant. EGC (i.e., epigallocatechin) and GC (i.e., gattocatechin) are also types of catechin found in green tea.

Green tea and green tea extract have been added to confections as flavoring agents due to their flavor and reported health benefits. Polyphenols are also antioxidants, giving an advantage to their use in confections that have higher moistures. The source of the polyphenol used in the following examples illustrating this invention was green tea extract that had over 90% polyphenol content. The polyphenol was a flavonoid. Though the source of polyphenol used in the illustrative examples was green tea extract, this invention is not limited to green tea extract or only to flavonoids.

Bulking agents give a confectionary product weight and volume. The dissolving of the bulking agent during chewing releases the bulking agent from the confectionary product and delivers sweeteners, flavor, and/or other ingredients in confections throughout the chewing time. Typically, confectionary bulking agents are sweeteners themselves, with the most popular sweetener being sucrose. For diabetics, sugarless confections have been marketed that use polyols instead of sucrose with the most popular being sorbitol and maltitol. Any ingredient added to confectionary products can be considered a bulking agent if it gives the confectionary product weight and volume. When the bulking agent is not sucrose, high intensity sweeteners (e.g., aspartame, sucralose, acesulfame, rebiana) have often been added to confections to increase sweetness.

Typically, other ingredients have been added to confectionary products to effect texture, while possibly delivering other benefits. Fiber has been used in confections to affect texture, to hold moisture, and to allow fiber content nutritional claims. Examples of fiber ingredients typically used in confectionary products include inulin (branched or straight chain) and dextrins (e.g. pyrodextrins and indigestible dextrins). Proteins, such as gelatin, milk proteins and milk protein salts, have been used in confections to affect texture, to hold moisture, and to allow protein content nutritional claims. Fats, oils, and emulsifiers (e.g., lecithin, glyceride monosterates) have been used in confections to affect texture, such as through softening and lubrication. Modified starch, hydrocolloid gums (e.g. gum arabic, xanthan gum, carrageenan gum, locust bean gum, and gellan gum), and pectin (low and high methoxy) have usually been added to confectionary products to affect texture by creating a gel matrix or to hold moisture. Other ingredients have been added to confectionary products for flavor (e.g. flavors and acids).

Other ingredients commonly added to confectionary products include, but are not limited to, sensetes, cooling agents, active ingredients (e.g. drugs and mendicants), preservatives, and colors.

An aspect of this invention is a confectionary product comprising a gel matrix that is water insoluble, yet will disintegrate during chewing after 2 to 40 minutes under mouth conditions. An aspect of this invention is that the water insoluble gel matrix is made by complexing gelatin with polyphenol in a polyphenol to gelatin ratio of 0.2:1 to 0.8:1 by weight in the presence of water, wherein the polyphenol and gelatin complex is made by mixing dry gelatin with a polyphenol and water solution. An aspect of this invention is that the insoluble polyphenol-gelatin complex contains up to 60 wt.% water based on polyphenol and gelatin solids. An aspect of this invention is that the polyphenol-gelatin complex is combined with at least one bulking agent so that the complex and bulking agent become a homogeneous mass upon mixing and then disintegrates upon chewing after 2 to 40 minutes. An aspect of this invention is that the bulking agent combined with the polyphenol-gelatin complex is selected from the group consisting of erythritol, mannitol, hydrocolloid gums, modified starch, pectin, inulin, milk protein, milk protein salt, and combinations thereof.

An aspect of this invention is a confectionary product comprising a polyphenol and gelatin complex with water, wherein the polyphenol and gelatin complex contains polyphenol to gelatin ratio of 0.2:1 to 0.8:1 by weight wherein the polyphenol and gelatin complex is made by mixing dry gelatin with a polyphenol and water solution and a bulking agent selected from group consisting of erythritol, mannitol, hydrocolloid gums, modified starch, pectin, inulin, protein, protein salts, and combinations thereof; wherein the confectionary product has an elastic texture and disintegrates in the mouth during chewing under mouth conditions.

An aspect of this inventions is that the confectionary product containing a polyphenol and gelatin complex at a polyphenol to gelatin ratio of 0.2:1 to 0.8:1 by weight wherein the polyphenol and gelatin complex is made by mixing dry gelatin with a polyphenol and water solution, and a bulking agent selected from group consisting of erythritol, mannitol, hydrocolloid gums, modified starch, pectin, inulin, protein, protein salts, and combinations thereof, wherein the confectionary product can be chewed for 2 to 40 minutes before the confectionary product disintegrates during chewing under mouth conditions.

An aspect of this invention is a confection that comprises a polyphenol and gelatin complex and bulking agent, which chews like a chewing gum, but is totally edible, has no remaining "gum cud", and eventually disintegrates under mouth conditions by chewing for greater than 2 minutes.

An aspect of this invention is a confectionary product that comprises polyphenol, gelatin, water, and bulking agent, which can be chewed without disintegration for a longer time than a confection containing polyphenol and gelatin that are not in an insoluble complex form.

An aspect of this invention is a confectionary product that comprises a polyphenol complex with water and a bulking agent, whereas the bulking agent is composed of a single or multiple ingredients, wherein the confectionary product disintegrates by chewing under mouth conditions in 2 to 40 minutes.

An aspect of this invention is a confectionary product, comprising: a. 5 - 95 wt.% polyphenol-gelatin complex containing up to 60 wt.% water based on polyphenol and gelatin dry solids, having a polyphenol to gelatin weight ratio of 0.2:1 to 0.8:1; and b. 10-95 wt.% bulking agent selected from group consisting of erythritol, mannitol, hydrocolloid gums, modified starch, pectin, inulin, milk protein, milk protein salt, and combinations thereof; wherein the polyphenol and gelatin complex is made by mixing dry gelatin with a polyphenol and water solution; wherein the confection disintegrates during chewing under mouth conditions in 2 to 40 minutes.

An aspect of this invention is a method of making a confectionary product comprising the steps of: a. making a polyphenol water solution by mixing polyphenol with water; b. making a polyphenol-gelatin complex mass by mixing the polyphenol water solution with dry gelatin in a mixer at 28 - 90 C; c. making a confectionary mass by mixing a bulking agent into the polyphenol-gelatin complex mass; and forming confectionary pieces from the confectionary mass. An aspect of this invention is a method as previously described, wherein the polyphenol-gelatin complex mass comprises polyphenol to gelatin ratio of 0.2:1 to 0.8:1 by weight. An aspect of this invention as previously described, wherein the bulking agent is selected from group consisting of erythritol, mannitol, hydrocolloid gum, modified starch, pectin, inulin, milk protein, milk protein salt, and combinations thereof.

Typically, a confectioner will choose a gelling agent such as pectin or modified starch to create "shorter" textured confectionary products, that is, confections that are moderately elastic. These products are designed for fast release of flavors and sweeteners as the matrix quickly disintegrates during less than one minute of chewing. Typical confectionary products with desired short textures are gum drops and jelly confections.

Typically, a confectioner will choose a gel matrix material such as gelatin to create "long" textured confectionary products, that is, confectionary products that are more elastic and slower dissolving than "short" textured confections. The most common gelatin containing confectionary product is gummies, though many chewy grained confections also contain gelatin as their gel matrix material. These confections will disintegrate during less than one minute of chewing.

The most popular gummies are Gummi Bears initially sold in Germany in 1922. Now gummies are sold world-wide in various shapes. Gummi Bears contain gelatin, sugar, glucose or corn syrup, starch, flavoring, color, and citric acid. Sometimes vitamins or other ingredients are added. Taffies are examples of chewy grained confections. Chewy grained confections can include gelatin as it's gel matrix material. The texture is modified by crystalline sugar (i.e., grain). Both gummies and chewy grained confections might be chewed for up to one minute before they disintegrate in the mouth.

Consumers like chewing gum because it can retain it's elastic texture over long periods of chewing times. Chewing gum contains an elastomer and bulking agent. The elastomer gives the chewing gum its elastic texture. The elastomer is water insoluble and will remain in the consumer's mouth until the consumer removes and disposes it. Consumers like the long chewing ability of chewing gum, but do not like the inconvenience of disposing of the water-insoluble remaining elastomer. Typical chewing gum elastomer materials are allowed to be in chewing gum per U. S. Federal Regulations, but the elastomer materials are not considered edible and are not to be swallowed.

The problem is how to create a confection that will have the preferred elastic texture of chewing gum over a long chewing time, and yet not have the remaining material, which must be disposed of. The confection must also be totally edible. Additionally, a confectioner would want to be able to alter the length of the chewing time before disintegration in order to create different confectionary product profiles.

The solution is a confectionary product, comprising: a. 5 - 95 wt.% polyphenol-gelatin complex containing up to 60 wt.% water based on polyphenol and gelatin dry solids, having a polyphenol to gelatin weight ratio of 0.2:1 to 0.8:1; and b. 10-95 wt% bulking agent selected from group consisting of erythritol, mannitol, hydrocolloid gums, modified starch, pectin, inulin, protein, protein salt, and combinations thereof; wherein the polyphenol and gelatin complex is made by mixing dry gelatin with a polyphenol and water solution; wherein the confection disintegrates during chewing under mouth conditions in 2 to 40 minutes. Additionally, a confectioner would be able to alter the chewing time until disintegration of the confectionary product by altering the ratio of polyphenol to gelatin in the complex, by altering the strength and flexibility of the polyphenol-gelatin complex through complex formation conditions, and by altering the bulking agents mixed with the polyphenol-gelatin complex.

In theory, the polyphenol-gelatin complex is a gel matrix based on hydrogen bonding and/or hydrophobic interactions between polyphenol and gelatin protein chains. Polyphenol-gelatin complex contains gelatin chains bridged together by polyphenol through hydrogen bonding and/or hydrophobic interactions, which give an elastic texture through it's flexibility and durability to the physical cutting and grinding force of chewing. The greater the amount of bonding and interactions between polyphenol and gelatin, the longer the chewing time before a confectionary product containing the complex will disintegrate during chewing under mouth conditions. Thus, the duration of chewing time before disintegration can be adjusted in three ways: 1) by the ratio of polyphenol to gelatin in the complex; 2) by the way the complex is made; and 3) by the additional ingredients in the confection that would affect the complex.

As previously mentioned, an aspect of this invention is a method of making a confectionary product comprising the steps of: a. making a polyphenol water solution by mixing polyphenol with water; b. making a polyphenol-gelatin complex mass by mixing the polyphenol water solution with dry gelatin in a mixer at 28 - 90 C; c. making a confectionary mass by mixing a bulking agent into the polyphenol-gelatin complex mass; and d. forming confectionary pieces from the confectionary mass. An aspect of this invention is a method as previously described, wherein the polyphenol-gelatin complex mass comprises polyphenol to gelatin ratio of 0.2:1 to 0.8:1 by weight.

In the method above, the polyphenol-gelatin complex could be made by adding the formula weight of dry gelatin to a mixer, adding to the mixer a premixed solution containing formula weight polyphenol (e.g. green tea extract) and formula weight water, and then mixing until the mass was homogeneous. The process temperature (i.e. mixing temperature) must be high enough to create the hydration of the gelatin and polyphenol and create the bonding between them, but not so high as to damage the gelatin. Aspects of this invention have the processing temperature as 28 C to 90 C, most preferably 35 C to 55 C.

In the method above, the polyphenol-gelatin complex could be made with an amount of water up to 60 wt.% based on the dry weight of the polyphenol and gelatin in the complex. The amount of water to be used can vary depending on the processing temperature. The greater the processing temperature, the less water necessary to make the complex. As the texture of the confectionary product resulting from the use of the complex in the confection is due in part to it's flexibility, and that flexibility is in part due to the water lubricating the complex matrix, the level of water in the complex is 1 to 60 wt.%, more preferably 20 - 40 wt.%, based on the weight of the polyphenol and gelatin in the complex.

As the texture of the polyphenol-gelatin complex is in part based on the interactions between the polyphenol and gelatin, additional ingredients that interfere with those interactions would decrease the chewing time before disintegration of a resulting confectionary product containing the polyphenol-gelatin complex. This assumes that the chosen additional ingredient did not have such a strong influence on the complex that a homogeneous mass can not be formed by mixing the additional ingredient with the complex.

Also, as the texture of the complex is in part based on water lubricating the complex, additional ingredients that have a greater affinity for water than the complex, and thus pull water from the complex, would decrease the chewing time before disintegration of a confectionary product containing the polyphenol-gelatin complex and additional ingredient. This assumes that the chosen additional ingredient did not have such a strong affinity for water relative to the complex that a homogeneous mass can not be formed by mixing the additional ingredient with the formed complex.

Surprisingly, the ingredients that could be used as suitable bulking agents with the polyphenol-gelatin complex to make an elastic confectionary product of this invention do not include the typical confection bulking agents of sucrose, sorbitol, maltitol, isomalt, or xylitol. When these ingredients were mixed with the polyphenol-gelatin complex, water was pulled from the complex (i.e., water separation occurred) and no homogeneous mass could be formed (i.e., complex broke). When erythritol was used as the ulking agent, a small amount of water (less than that with sucrose, sorbitol, maltitol, isomalt, or xylitol) was pulled from the complex as small amounts of erythritol were added with the complex, but that water mixed into the confectionary mass as more erythritol was mixed with the complex, making a final homogeneous confectionary product. Mannitol mixed with polyphenol-gelatin complex into a homogeneous confectionary mass without causing water separation. The preferred bulking agents of this group of ingredients were erythritol and mannitol.

Some ingredients, including but not limited to gum arabic, inulin, pullulan, milk proteins and milk protein salts, can be used as bulking agents in a confectionary product with polyphenol-gelatin complex. At certain addition levels, mixing these ingredients with a polyphenol-gelatin complex made a homogeneous confectionary mass (i.e., complex intact), which had a chewing time before disintegration of at least one minute. By theory, these ingredients did not interfere (at the additional levels) with the hydrogen bonding and/or hydrophobic interactions between polyphenol and gelatin, and did not have a stronger affinity for water than the polyphenol-gelatin complex. For these ingredients, addition levels of about 10 wt.% to 100 wt.% based on polyphenol and gelatin weigh would not cause the matrix to break and/or the complex to disintegrate.

Other ingredients, including but not limited to modified starch, betacyclodextrin, xanthan gum, carrageenan gum, locust bean gum, pectin, and gellan gum, can be used as bulking agents in a confectionary product with polyphenol-gelatin complex. Mixing these ingredients with the polyphenol-gelatin complex made a homogeneous (i.e., complex intact) confectionary mass. These ingredients have an ability to influence the chewing time, that is they can shorten the chewing time. For example, these ingredients added to the complex at 10 wt.% to 100 wt.% based on polyphenol and gelatin weight could be used to cause a confectionary product with a greater amount of complex or with a larger ratio of polyphenol:gelatin to disintegrate faster than if the these ingredients were not present. Thus, these ingredients could make a longer chewing confectionary product disintegrate faster, though the original confectionary mass could be made, that is, the confectionary mass was homogeneous.

Lecithin surprisingly can be used to add bulk and softening at certain weight ratios with the complex, and can be used to decrease the chewing time until disintegration at other weight ratios. At certain levels of addition, lecithin will affect the complex enough that it will disintegrate. How much lecithin is needed to cause disintegration depends on the ratio of polyphenol to gelatin in the complex.

Calcium carbonate, at certain addition levels could be used to give volume and bulk to a confectionary product containing polyphenol-gelatin complex. At certain levels, calcium carbonate did not appear to interfere with polyphenol-gelatin complex bonding or to have an affinity for water greater than that of the complex.

In an aspect of this invention, a confectionary product comprises a polyphenol-gelatin complex with water and a bulking agent, wherein the bulking agent comprises a single or multiple ingredients and the confectionary product disintegrates by chewing under mouth conditions of temperature and moisture in 2 to 40 minutes. The multiple ingredients would be chosen so as to make a homogeneous confectionary mass when mixed with polyphenol:gelatin complex. In theory, the multiple ingredients would not have a net greater affinity for water than the polyphenol-gelatin complex used in the confectionary product.

### COMPARATIVE RUNS AND EXAMPLES

The following comparative runs and examples of the invention are provided to illustrate, but not limit, the invention that is defined by the attached claims.

Table 1 gives formulas for confectionary products with three different polyphenol-gelatin ratios. The higher the polyphenol-gelatin ratio, the greater the chewing time until disintegration. The length of time the confections were chewed before the confection disintegrated are listed in Table 2.

**Table 1: Formulas for Confection With Polyphenol-Gelatin Complex**

| Ingredient | Example 1 | Example 2 | Example 3 |
|---|---|---|---|
| Polyphenol:Gelatin Ratio | 0.32:1.0 | 0.43:1.0 | 0.53:1.0 |
| Gelatin and Polyphenol (i.e., Green Tea Extract) | 19.6 | 19.6 | 19.6 |
| Water | 8.4 | 8.4 | 8.4 |
| Mannitol | 32.7 | 32.7 | 32.7 |
| Erythritol | 28.0 | 28.0 | 28.0 |
| Glycerin | 7.0 | 7.0 | 7.0 |
| Lecithin | 1.0 | 1.0 | 1.0 |
| Oil | 2.0 | 2.0 | 2.0 |
| High intensity Sweetener, Flavor | 1.3 | 1.3 | 1.3 |
| Total | 100 | 100 | 100 |

Confectionary products in Table 1 were produced by mixing, at 45 C, a polyphenol (i.e., green tea extract) premixed solution containing water into dry gelatin in a covered mixer (Brabender) for about 10 minutes. Mannitol and erythritol were then mixed into the polyphenol-gelatin complex containing water (e.g., containing about 30% water). The remaining formula ingredients were then mixed into the confectionary mass. The mass was then sheeted and cut into pieces.

The results in Table 2 show that the duration of chew time of a confectionary product can be adjusted by the ratio of polyphenol to gelatin in the complex.

**Table 2: Chewing Times For Disintegration of Confection With Polyphenol-Gelatin**

| Complex | Chew Times(min) |
|---|---|
| Example 1 | 9 min |
| Example 2 | 21 min |
| Example 3 | 33 min |

Table 2 includes the average chewing time of a group of 6 evaluators. The evaluators chewed samples of about 2 grams until the product totally disintegrated in their mouths and was swallowed. The results show that the greater the ratio of polyphenol to gelatin in the confection, the longer the product took to disintegrate, all other ingredients and production conditions being the same.

Polyphenol-gelatin complex made by the current mix method and by a precipitate method were similar in ability to make a confectionary product and in the chewing time before disintegration. Confectionary examples were made with polyphenol to gelatin ratio of 0.8:1, and then chewed. The goal was to evaluate if the polyphenol-gelatin complex, made by two different methods, would chew the same. Table 3 contains the formulas for two examples, each with 0.8:1 by weight polyphenol to gelatin complex.

**Table 3: Formulas for Confection With Polyphenol-Gelatin Complex**

| Process Used to Make Complex | Mix | Precipitate |
|---|---|---|
| | Example 4 | Example 5 |
| Polyphenol:Gelatin Ratio | 0.8:1.0 | 0.8:1.0 |
| Gelatin and Polyphenol (i.e., Green Tea Extract) | 19.6 | 19.6 |
| Water | 8.4 | 13.1 |
| Mannitol | 32.7 | 32.7 |
| Erythritol | 28.0 | 28.0 |
| Glycerin | 7.0 | 2.3 |
| Lecithin | 1.0 | 1.0 |
| Oil | 2.0 | 2.0 |
| High intensity Sweetener, Flavor | 1.3 | 1.3 |
| Total | 100 | 100 |

Example 4 was made in the same way (i.e., mix process) and to the same formula as examples 1, 2, and 3, except that the weights of polyphenol (i.e.,green tea extract) and gelatin were such as to create a polyphenol-gelatin complex with a ratio of polyphenol to gelatin of 0.8:1 by weight. Example 5 was produced with the same ratio of polyphenol (i.e., green tea extract) to gelatin as example 4, but the complex was made by a second method (i.e., precipitate method) and the final confection formula was balanced with glycerin. Complex made by the second method appears to trap a higher amount of water than the complex made by the first method. For example 5, the gelatin was premixed with excess water, and the polyphenol was premixed with excess water. The two solutions were combined and a precipitate formed, which contained a polyphenol to gelatin ratio of 0.8:1. The precipitate was used to make the confection in example 5. Whereas the complex of the first method (that was used for examples 1,2,3 and 4) contained about 30 wt.% water, the complex of the second method (that used for example 5) contained about 40 wt.% water. The complexed polyphenol-gelatin was then mixed with the bulking agent, and finally mixed with the remaining formula ingredients. The mixing was done at about 45 C.

Four gram samples of examples 4 and 5 were chewed for 65 minutes. Both examples had similar textures initially and throughout the 65 minute chew sessions. Though the mass of both examples 4 and 5 decreased during the chew sessions, the remaining mass had elastic texture at the end of 65 minutes. Neither the complex made by the first method, nor the complex made by the second method, appeared to disintegrate by 65 minutes of chewing (though the bulking agent had mostly been solubilized and removed). These results were different than the chew time results of examples 1, 2, and 3, which did disintegrate in less than 65 minutes. This data reinforces the premise that the greater the polyphenol to gelatin ratio, the longer the chew time before total disintegration.

The duration of chewing time of a confection containing a polyphenol-gelatin complex can be adjusted by the way the complex is made. As the polyphenol-gelatin complex is based on gelatin and polyphenol hydrogen bonding and/or hydrophobic interactions, the conditions used during the formation of the complex can affect the bonding process, which will affect the elastic texture and cohesive character of the resulting complex. The conditions used to make the complex influence whether the complex will form, if the complex will be elastic, and if unwanted water separation from the complex will occur. As one of the purposes of adding a gel complex to confections is to hold water in the confection, separation of water from the complex would be a defect. Separation of water from the complex also creates two phases that can not be co-mingled into a homogeneous mass, or are very difficult to co-mingle. This could lead to an unacceptable finished product.

Table 4 contains the factors explored that affect complex formation. Key success criteria were whether the sample was "watery" (i.e., water separation from the complex), was processable (i.e., could remove it from the mixer), actually created a complex, and was elastic.

**Table 4: Factors Affecting Complex Formation- Study Complex**

| Example | Water | Temp | Polyphenol/Gelatin ratio | Watery | Processability | Complex Formation | Complex Elasticity |
|---|---|---|---|---|---|---|---|
| 6 | 30 | 80 | 0.5 | 1 | 0 | 1 | 1 |
| 7 | 50 | 80 | 0.2 | 1 | 0 | 1 | 0 |
| 8 | 30 | 55 | 0.8 | 1 | 1 | 1 | 1 |
| 9 | 30 | 55 | 0.5 | 1 | 1 | 1 | 1 |
| 10 | 30 | 35 | 0.5 | 1 | 1 | 1 | 1 |
| 11 | 15 | 35 | 0.2 | 1 | 0 | 0 | 1 |
| 12 | 50 | 35 | 0.2 | 0 | 0 | 0 | 0 |
| 13 | 50 | 55 | 0.5 | 0 | 1 | 1 | 1 |
| 14 | 15 | 80 | 0.2 | 1 | 1 | 0 | 0 |
| 15 | 50 | 80 | 0.8 | 1 | 0 | 1 | 1 |
| 16 | 30 | 55 | 0.2 | 1 | 1 | 1 | 0 |
| 17 | 15 | 55 | 0.5 | 1 | 1 | 0 | 1 |
| 18 | 50 | 35 | 0.8 | 0 | 1 | 1 | 1 |
| 19 | 15 | 35 | 0.8 | 1 | 0 | 0 | 0 |
| 20 | 15 | 80 | 0.8 | 1 | 0 | 0 | 1 |
| 21 | 50 | 55 | 0.8 | 0 | 1 | 1 | 1 |

Results Key:: Watery: 1=No Water, 0= Yes Water; Processability: 1=Good, 0=Poor; Complex Formation: 1=Good, 0=Poor; Complex Elasticity: 1=Good, 0=Poor
Examples 6 - 21 were made by first dissolving the polyphenol (i.e., green tea extract) in water, and then mixing the polyphenol solution into dry gelatin in a mixer (i.e., Brabender) at complex water content and mixer temperature listed in Table 4. The complex was then evaluated as to water separation, processability, complex formation, and complex elasticity. The results are listed in Table 4.

The conclusions from this study included: 1. 30% water was preferred, as 50% water sometimes resulted in water separation and 15% water had poor complex formation; 2. 55 C provided good processability at all conditions, and 35 C examples with 30% water/0.5:1 polyphenol:gelatin ratio and 50% water/0.8:1 polyphenol:gelatin had preferred processability; and 3. Polyphenol:gelatin ratios of 0.5:1 and 0.8:1 polyphenol:gelatin provided the preferred complex elasticity. The overall preferred conditions within this set of tested conditions was 30% water, 35 C and 55 C, and 0.5:1 polyphenol:gelatin ratio or 0.8:1 polyphenol:gelatin ratio. Further process development (in Table 5) supported the findings in Table 4, that is, certain conditions produced polyphenol-gelatin complex with an elastic texture.

Table 5 contains a narrower range of factors which affect complex formation. Key success criteria were that the complex formed and the complex was processable. By processable, it was meant that the mixed mass was less sticky and could easily be removed from the mixer.

| Table 5: Factors Affecting Complex Formation | | | | | | | |
|---|---|---|---|---|---|---|---|
| Examples | Temp | Water (%) | GTE (%) | Gelatin (%) | GTE/Gelatin ratio | Complex Formation | Complex Processing |
| 22 | 35 | 20 | 22.86 | 57.14 | 0.4 | No | |
| 23 | 35 | 20 | 26.67 | 53.33 | 0.5 | No | |
| 24 | 55 | 20 | 22.86 | 57.14 | 0.4 | Yes | No |
| 25 | 55 | 20 | 26.67 | 53.33 | 0.5 | Yes | No |
| 26 | 35 | 30 | 20.00 | 50.00 | 0.4 | Yes | Yes |
| 27 | 35 | 30 | 23.33 | 46.67 | 0.5 | Yes | Yes |
| 28 | 55 | 30 | 20.00 | 50.00 | 0.4 | Yes | No |
| 29 | 55 | 30 | 23.33 | 46.67 | 0.5 | Yes | No |

Examples 22 - 29 were made by first dissolving the polyphenol (i.e., green tea extract) in water, and then mixing the polyphenol solution into dry gelatin in a mixer (i.e., Brabender) at water content percentages and mixer temperatures listed in Table 4. The complex was then evaluated as to complex formation and complex processability. The results are given in Table 5. The conclusions of the study included: 1. Though the preferred water content was 30%, raising the processing temperature to 55 C allowed the complex to be formed at 20% water, and the complex could be made at 55 C and 20% water, though the complex was very sticky and hard to remove from the mixer (i.e. low processability); 2. At 30% water content and 35 C, both 0.4:1 and 0.5:1 polyphenol:gelatin ratios gave the best complex formation and processability.

The duration of chewing time of a confectionary product containing this polyphenol-gelatin complex can be adjusted by additional ingredients in the confection that would affect the complex. As the polyphenol-gelatin complex is gelatin complexed with polyphenol through hydrogen bonds and/or hydrophobic interactions, the complex can be affected by additional ingredients added to the confection formula. The additional ingredients might interfere with the bonding and hydrophobic interaction between polyphenol and gelatin, and/or might have more affinity for the water originally in the complex than the polyphenol and gelatin, and /or might otherwise physically impede the flexibility of the complex. Some ingredients have limited effect on the complex, and the resulting duration of the confection chewing time would be dictated by the nature of the complex as originally made. By theory, this group of ingredients has less effect on the hydrogen bonding and/or hydrophobic interaction of the complex and/or have lesser affinity for water than the complex. Other ingredients have greater effect on the complex.

Table 6 contains a formula for a 0.8:1 polyphenol-gelatin complex. This complex material was used to study of the effects of additional ingredients on the complex. As previously discussed, the higher the ratio of polyphenol to gelatin, the longer the chewing time (all other conditions kept the same). As previously discussed, confectionary product made with 0.8:1 polyphenol-gelatin complex was shown to be able to be chewed for 65 minutes without disintegration.

**Table 6: Polyphenol-Gelatin Complex 0.8:1.0 Ratio**

| Ingredients | |
|---|---|
| Gelatin | 39wt.% |
| Polyphenol | 31wt.% |
| Water | 30wt.% |
| Total | 100wt. % |

This complex material was prepared in a mixer at 55 C. Polyphenol (i.e., green tea extract) was dissolved in water. Dry gelatin was added to a mixer and the polyphenol solution was added into the mixer. The mixer was covered and the material mixed for about 10 minutes until it was uniform.

A portion of the 0.8:1 polyphenol-gelatin complex was added to a Brabender mixer and additional ingredients (Groups A - E) were added to the complex one gram at a time. Results were recorded when separated water was seen and when the complex broke or when the maximum amount of additional ingredient was added due to mixer capacity. Results are listed in Tables 7, 9, 10 and 11.

Bulking agents which have a stronger affinity for water than the complex pulled water from the complex and caused unwanted water separation. This made the hydrogen bonding and hydrophobic interactions between gelatin and polyphenol weaker and/or made the complex less flexible. All of these affects can change the chewing time of the resulting confectionary product.

Table 7 gives the results from mixing in the ingredients in Group A and Group B with the complex of Table 6. Table 7 lists several ingredients that are typically added as bulking agents in chewing gum and confections. The results in Table 7 are surprising as to which materials caused water separation and as to how much could be added to the complex without complex breakdown (i.e., creation of non-homogeneous mass).

**Table 7: Results of Group A and Group B Ingredient Addition**

| Example | Ingredient | Amount of P-G Complex with Water | Amount of Ingredient - For Water Separation | Final Amount of Ingredient Added | Final Texture |
|---|---|---|---|---|---|
| | Group A | | | | |
| 30 | Sugar | 100 g | 5 g | 25 g | Complex broke |
| 31 | Maltitol | 100 g | 4 g | 18 g | Complex broke |
| 32 | Sorbitol | 100 g | 5 g | 55 g | Complex broke |
| 33 | Isomalt | 60 g | 5 g | 21 g | Complex broke |
| 34 | Xylitol | 100 g | 5 g | 55 g | Complex broke |

| | Group B | | | | |
|---|---|---|---|---|---|
| 35 | Mannitol | 30 g | didn't separate | 66 g | Complex intact |
| 36 | Erythritol | 100 g | 4 g | 57 g | Complex intact |

Group A ingredients (including ingredients such as sugar, maltitol, sorbitol, isomalt, and xylitol) and Group B ingredients (including mannitol and erythritol) are often called bulking agents, bulk sweeteners, or sweeteners. Group A ingredients of sugar, maltitol, sorbitol, isomalt, and xylitol caused water separation when 4 - 5 g amounts of Group A ingredients were mixed with 60 - 100 g examples of polyphenol-gelatin complex (see table). When 18 - 55 g of Group A ingredients were mixed with 60 - 100 g examples of polyphenol-gelatin complex, the complex broke (see table). Group B ingredient erythritol caused water separation when 4 g were mixed with 100 grams of polyphenol-gelatin complex, though continued addition of erythritol caused the water to blend in. The amount of water separated from the complex appeared less than that separated by sugar, maltitol, sorbitol, isomalt, or xylitol. At a final erythritol addition of 57 g (amount limited by capacity of mixer) the complex was intact. Group B ingredient mannitol caused no water separation when it was added to the 30 g polyphenol-gelatin complex example. When 66 g of mannitol was mixed with the 30 g polyphenol-gelatin complex, the complex was intact. The results of Table 7 agree with the results of Table 3. The confectionary products in Table 3 included 0.8:1 polyphenol-gelatin complex, mannitol, and erythritol.

There is a possible pattern to the results of Group A and Group B. Polyols and sugars, which are hygroscopic and which are very soluble in water, competed with polyphenol-gelatin for water trapped in the complex. Hygroscopicity is the ability of a substance to attract water molecules from the surrounding environment through either absorption or adsorption. Table 8 gives basic data on the bulk agents in Groups A and B that were listed in Table 7.

**Table 8: Bulk Sweetener Hygroscopicity and Water Solubility**

| | Solubility at 25C | Degree of Hygroscopicity at |
|---|---|---|
| Ingredient | (g/100ml) Water | 20C |
| Sugar | 185g/100ml | low hygroscopicity |
| maltitol | 175g/100 ml | low hygroscopicity |
| Sorbitol | 235g/100 ml | high hygroscopicity |
| Isomalt 1 pt | 15g/100 ml | |
| Isomalt 2 pt | 59g/100 ml | |
| Isomalt net | 42g/100 ml | very low hygroscopicity |
| Xylitol | 200g/100 ml | high hygroscopicity |
| Mannitol | 22g/100 ml | very low hygroscopicity |
| Erythritol | 35g/100 ml | very low hygroscopicity |

Mannitol and erythritol have very low hygroscopicity and have very low solubilities, so they were more compatible with polyphenol-gelatin complex than other bulk sweeteners, that is, mannitol and erythritol did not affect the polyphenol-gelatin complex as much as the other bulk sweeteners tested. The trend of the data in Table 7 of the affects of the Group A and B ingredients is similar to the trend in the ingredient's water solubility and hygroscopicity - except for isomalt. Isomalt has very low hygroscopicity and low water solubility, but isomalt did not appear to affect the polyphenol-gelatin complex like erythritol or mannitol. Isomalt appeared to affect the polyphenol-gelatin more like the more hygroscopic and more soluble sugar, maltitol, xylitol and sorbitol. That isomalt interacted with the polyphenol-gelatin complex more like maltitol than erythritol might have been due to isomalt having two portions and one was more soluble than erythritol. That could have been enough to cause isomalt to not act like erythritol.

Table 9 gives the results from mixing the ingredients in Group C with the complex. Though many of these ingredients are often used as gelling agents themselves in chewy confections, their ability to be added (up to a certain amount) without interference with the polyphenol-gelatin complex during mixing surprisingly means that they could be added to the complex to give bulk to the confection without breaking the complex.

**Table 9: Results of Group C Additional Ingredient Addition**

| Example | Ingredient | Amount of P-G Complex with Water | Amount of Ingredient - For Water Separation | Final Amount of Ingredient Added | Final Texture |
|---|---|---|---|---|---|
| | Group C | | | | |
| 37 | Modified Starch | 60 g | didn't separate | 60 g | Complex intact |
| 38 | Betacyclodextrin | 80 g | few grams | 50 g | Complex intact |
| 39 | Xanthan Gum | 70 g | didn't separate | 35 g | Complex intact |
| 40 | Carrageenan Gum | 80 g | didn't separate | 20 g | Complex intact |
| 41 | Locust Bean Gum | 70 g | didn't separate | 40 g | Complex intact |
| 42 | Pectin (Low Methoxy) | 90 g | didn't separate | 25 g | Complex intact |
| 43 | Pectin (High Methoxy) | 85 g | didn't separate | 25 g | Complex intact |
| 44 | Gellan Gum | 70 g | didn't separate | 15 g | Complex intact |

Group C includes ingredients such as modified starch, betacyclodextrin, xanthan gum, carrageenan gum, locust bean gum, pectin (Low Methoxy), pectin (High Methoxy), and gellan gum. Group C ingredients had limited effect on 0.8:1 polyphenol-gelatin complex at addition levels given in Table 9. At these levels, the confection containing the complex and additional ingredient was still a homogeneous mass with the complex intact after mixing. Group C ingredients did not cause water separation. When these confections were chewed (at the maximum level addition level) they disintegrated in the mouth after at least one minute of chewing. Group C ingredients were added to a nondisintegrating complex and made it disintegrate upon chewing. As these ingredients caused the 0.8:1 complex to disintegrate, it is likely that these ingredients would cause complexes with lesser ratios of polyphenol to gelatin to likewise disintegrate upon chewing after confection formation.

Table 10 gives the results from mixing ingredients in Group D with the 0.8:1 complex of Table 6. The ingredients included in Group D did not appear to interfere with the polyphenol-gelatin complex during mixing or during at least one minute of chewing at the levels that were added in Table 10.

**Table 10: Results of Group D Ingredient Addition**

| Example | Ingredient | Amount of P-G Complex with Water | Amount of Ingredient - For Water Separation | Final Amount of Ingredient Added | Final Texture |
|---|---|---|---|---|---|
| | Group D | | | | |
| 45 | Gum Arabic | 100 g | didn't separate | 30 g | Complex intact |
| 46 | Inulin | 100 g | didn't separate | 20 g | Complex intact |
| 47 | Pullulan | 70 g | didn't separate | 20 g | Complex intact |
| 48 | Whey Protein | 70 g | didn't separate | 30 g | Complex intact |
| 49 | Acid Casein | 70 g | didn't separate | 30 g | Complex intact |
| 50 | Calcium Caseinate | 70 g | didn't separate | 30 g | Complex intact |

Group D included ingredients such as gum arabic, inulin, pullulan, whey protein, acid casein, and calcium caseinate. Group D ingredients did not cause water separation when mixed with the 0.8:1 complex of Table 6. Group D ingredients had limited effect on 0.8:1 polyphenol-gelatin complex at addition levels given in Table 10. At these levels, the confection containing the complex and additional ingredient was still a homogeneous mass with the complex intact. The ingredients in Group D did not cause the stable 0.8:1 complex to disintegrate with chewing of at least one minute after the confection was formed at levels in Table 10. As these ingredients did not cause the 0.8:1 complex to disintegrate, it is likely that these ingredients would not cause complexes with lesser ratios of polyphenol to gelatin to likewise disintegrate upon chewing for one minute after confection formation.

As the confections containing the additional ingredients in Table 10 did not cause the 0.8:1 polyphenol-gelatin complex to disintegrate, they could be used as bulking agents for confections designed to maintain a long chewing time, or they could be used with other bulking agents (such as those in Table 9) that do cause disintegration for confections designed with a short chewing time.

Table 11 gives the results from mixing the ingredients in Group E with the complex. These ingredients are often used in confections for texture, lubrication or flavor. Their ability to be added (up to a certain amount) without interference with the polyphenol-gelatin complex surprisingly means that they could be added for function (such as lubrication or flavor) while giving bulk without breaking the polyphenol-gelatin complex.

**Table 11: Results of Group E Ingredient Addition**

| Example | Ingredient | Amount of P-G Complex with Water | Amount of Ingredient - For Water Separation | Final Amount of Ingredient Added | Final Texture |
|---|---|---|---|---|---|
| | Group E | | | | |
| 52 | Pyrodextrin | 100 g | 20 g | 25 g | Complex broke |
| 53 | Branched Inulin | 125 g | 3 g | 28 g | Complex intact |
| 54 | Lecithin | 100 g | didn't separate | 20 g | Complex intact |
| 55 | Glycerol Monostearate | 80 g | didn't separate | 38 g | Complex intact |
| 56 | Sodium Chloride | 60 g | didn't separate | 60 g | Complex intact |
| 57 | Citric Acid | 70 g | didn't separate | 145 g | Complex intact |
| 58 | Malic Acid | 70 g | didn't separate | 75 g | Complex intact |
| 59 | Tartaric Acid | 70 g | didn't separate | 80 g | Complex intact |
| 60 | Fumaric Acid | 70 g | didn't separate | 50 g | Complex intact |

Group E ingredients include pyrodextrin, branched inulin, lecithin, glycerol monosterate, sodium chlorate, citric acid, malic acid, tartaric acid, and fumaric acid. Group E ingredients could be added to confections for texture (e.g., lecithin, glycerol monosterates) or for flavor (e.g. citric acid, sodium chloride). As shown in Table 11, some group E ingredients did cause water separation when mixed with the 0.8:1 complex. All ingredients in group E made homogeneous confectionary product when mixed with 0.8:1 polyphenol - gelatin complex.

Many of the added ingredients in Tables 7, 9, 10 and 11 gave additional beneficial properties to the confectionary product containing 0.8:1 polyphenol-gelatin complex. In particular, the following ingredients softened the texture: glycerol monosterate, citric acid, malic acid, tartaric acid, and fumaric acid. Lecithin had an unusual affect on the complex: when 20 g of lecithin was mixed with 100 g of complex the resulting confectionary product softened, and when 28 g of lecithin was mixed with 100 g of complex the resulting confectionary product disintegrated.

Calcium carbonate also had an unexpected effect on the complex. When 50 g of calcium carbonate was mixed with 70 g of complex, the complex broke, but when an additional 20 g of calcium carbonate was added to the same sample, the complex was soft and did not disintegrate after at least one minute of chewing.

A confection that is not tough, gives little resistance to biting through it. A confection that is not bouncy, has a tendency to deform and separate. Stickiness is an attribute separate from toughness and bounciness, which has to do with the confection sticking to teeth. Table 12 gives confectionary product samples containing 0.5:1 or 0.6:1 polyphenol - gelatin complex that were evaluated for toughness, bounciness, and stickiness against a commercial chewing gum sample.

**Table 12: Confection Formulas With Different Levels and Amounts of Complex**

| Ingredients | Example 61 | Example 62 | Example 63 |
|---|---|---|---|
| Polyphenol:Gelatin Ratio | 0.5:1.0 | 0.5:1.0 | 0.6:1.0 |
| Percentage Complex in Formula | 28% | 35% | 35% |
| Gelatin | 13.2 | 16.5 | 15.3 |
| Polyphenol (Green Tea Extract) | 6.4 | 8.0 | 9.2 |
| Water | 8.4 | 10.5 | 10.5 |
| Mannitol | 32.7 | 29.5 | 29.5 |
| Erythritol | 28.0 | 25.3 | 25.3 |
| Glycerol | 7.0 | 6.3 | 6.3 |
| Lecithin | 1.0 | 0.9 | 0.9 |
| Oil | 2.0 | 1.8 | 1.8 |
| High intensity Sweetener, Flavor | 1.3 | 1.2 | 1.2 |
| Total | 100.0 | 100.0 | 100.0 |

The examples in Table 12 were made by first making the 0.5:1 and 0.6:1 polyphenol-gelatin complexes by mixing the appropriate amount of polyphenol dissolved in water into dry gelatin in the appropriate the polyphenol-gelatin ratios. The complexes were then mixed with mannitol and erythritol, and then mixed with the other formula ingredients. Each confectionary mass was then sheeted and evaluated blind and in random order by 7 participants. Commercial chewing gum was also rotated into the example order. The examples were chewed for 6 minutes. Table 13 gives the results.

Table 13 includes chewing time sensory test results for confectionary product made with various complex ratios and various amount of complex in the final confectionary product.

**Table 13: Chew Results (6 min)**

| Example | Toughness | Bounciness | Stickiness |
|---|---|---|---|
| Example 61 (.5 - 28%) | 3.4 | 4.3 | 3.4 |
| Example 62 (.5 - 35%) | 3.6 | 4.0 | 4.4 |
| Example 63 (.6 - 35%) | 5.1 | 5.9 | 3.7 |
| Commercial Chewing Gum | 3.6 | 3.6 | 1.9 |

The results showed that the three confections containing complex had toughness and bounciness scores similar to the commercial chewing gum example when chewed for 6 minutes. Example 62, with the higher amount of complex, was closer to the commercial chewing gum example in toughness and bounciness relative to the other examples. Example 63, with the higher polyphenol:gelatin ratio and greater complex content, had higher toughness and bounciness scores than the other examples, including the chewing gum example.

The previously discussed examples illustrate that a confectionary product can be made with a polyphenol-gelatin complex with the ratio of polyphenol to gelatin of 0.2:1.0 to 0.9:1.0 by weight, which can have the elastic texture and then disintegrate as the confection is chewed. The confection comprises polyphenol, gelatin, water, and bulking agent, wherein the polyphenol and gelatin are in an insoluble complex. Additional ingredients have been shown to cause the complex to break down, have no effect on the complex, or have limited effect on the complex. These results can be used to create confections with a desired chewing character and disintegration rate (i.e. chewing time).

## Claims

1. A confectionary product, comprising:
a. 5 - 95 wt.% polyphenol-gelatin complex containing up to 60 wt% water based on polyphenol and gelatin solids, having a polyphenol to gelatin weight ratio of 0.2:1 to 0.8:1 ; and
b. 10-95 wt.% bulking agent selected from group consisting of erythritol, mannitol, hydrocolloid gums, modified starch, pectin, inulin, protein, protein salts, and combinations thereof;
wherein the polyphenol and gelatin complex is made by mixing dry gelatin with a polyphenol and water solution; and
wherein the confectionary product disintegrates during chewing under mouth conditions in 2 to 40 minutes.

2. A confectionary product of claim 1, wherein the protein and protein salts are derived from milk or soybean materials.

3. A confectionary product of claim 1, wherein the confectionary product disintegrates during chewing under mouth conditions in 2 to 10 minutes.

4. A confectionary product of any of the preceding claims, wherein the polyphenol-gelatin complex is made at a mixing temperature of 28 - 90 °C.

5. A confectionary product of any preceding claims, wherein the confectionary product contains 10 - 60 wt.% polyphenol-complex.

6. A confectionary product of any of the preceding claims, further comprising a disintegrating amount of an ingredient selected from the group consisting of fats, oils, lecithin, emulsifiers, orbital, maltitol, isomalt, xylitol, sugar, calcium carbonate, and combination, thereof.

7. A method of making a confectionary product comprising the steps of:
a. making a polyphenol water solution by mixing polyphenol with water;
b. making a polyphenol-gelatin complex mass by mixing the polyphenol water solution with dry gelatin in a mixer at 28 - 90 °C;
c. making a confectionary mass by mixing a bulking agent into the polyphenol - gelatin complex mass; and
d. forming confectionary pieces from the confectionary mass.
wherein said bulking agent is selected from group consisting of erythritol, mannitol, hydrocolloid gums, modified starch, pectin, inulin, protein, protein salts, and combinations, thereof.

8. A method of claim 7, wherein polyphenol-gelatin complex mass comprises polyphenol and gelatin in polyphenol to gelatin ratio of 0.2:1 to 0.8:1 by weight.

9. A method of claim 7 or 8, wherein the protein and protein salts are derived from milk or soybean materials.

10. A method of claims 7 to 9, wherein the confectionary product disintegrates during chewing under mouth conditions in 2 to 10 minutes.

11. A method of claims 7 to 10, wherein the polyphenol-gelatin complex is made at a mixing temperature of 35-55 °C.

12. A method of claims 7 to 11, wherein the confectionary product contains 10 - 60 wt.% polyphenol-complex.

13. A method of claims 7 to 12 wherein the confectionary product further comprises a disintegrating amount of an ingredient selected from the group consisting of fats, oils, lecithin, emulsifiers, orbital, maltitol, isomalt, xylitol, sugar, calcium carbonate, and combination, thereof.

## Patentansprüche

1. Süßwarenprodukt, umfassend:
a. 5 - 95 Gew.-% Polyphenol-Gelatine-Komplex, welcher bis zu 60 Gew.-% Wasser auf Basis von Polyphenol- und Gelatine-Feststoffen enthält, mit einem Gewichtsverhältnis von Polyphenol zu Gelatine von 0,2:1 bis 0,8:1; und
b. 10 - 95 Gew.-% Füllstoff, der aus der Gruppe ausgewählt ist, bestehend aus Erythritol, Mannitol, Hydrokolloidgummis, modifizierter Stärke, Pektin, Inulin, Protein, Proteinsalzen, und Kombinationen davon;
wobei der Polyphenol- und Gelatine-Komplex durch Mischen von trockener Gelatine mit einer Polyphenol- und Wasser-Lösung hergestellt wird; und
wobei das Süßwarenprodukt während Kauens unter Mundbedingungen in 2 bis 40 Minuten zerfällt.

2. Süßwarenprodukt nach Anspruch 1, wobei das Protein und die Proteinsalze aus Milch- oder Sojabohnenmaterialien gewonnen sind.

3. Süßwarenprodukt nach Anspruch 1, wobei das Süßwarenprodukt während Kauens unter Mundbedingungen in 2 bis 10 Minuten zerfällt.

4. Süßwarenprodukt nach einem der vorhergehenden Ansprüche, wobei der Polyphenol-Gelatine-Komplex auf einer Mischtemperatur von 28 - 90 °C hergestellt wird.

5. Süßwarenprodukt nach einem der vorhergehenden Ansprüche, wobei das Süßwarenprodukt 10 - 60 Gew.-% Polyphenol-Komplex enthält.

6. Süßwarenprodukt nach einem der vorhergehenden Ansprüche, das weiter eine zerfallende Menge eines Bestandteils umfasst, der aus der Gruppe ausgewählt ist, bestehend aus Fetten, Ölen, Lecithin, Emulgatoren, Orbital, Maltitol, Isomalt, Xylitol, Zucker, Calciumcarbonat, und einer Kombination davon.

7. Verfahren zur Herstellung eines Süßwarenprodukts, umfassend folgende Schritte:
a. Herstellen einer Polyphenol-Wasser-Lösung durch Mischen von Polyphenol mit Wasser;
b. Herstellen einer Polyphenol-Gelatine-Komplex-Masse durch Mischen der Polyphenol-Wasser-Lösung mit trockener Gelatine in einem Mischer auf 28 - 90 °C;
c. Herstellen einer Süßwarenmasse durch Einmischen eines Füllstoffs in die Polyphenol-Gelatine-Komplex-Masse; und
d. Formen von Süßwarenstücken aus der Süßwarenmasse.
wobei der Füllstoff aus der Gruppe ausgewählt ist, bestehend aus Erythritol, Mannitol, Hydrokolloidgummis, modifizierter Stärke, Pektin, Inulin, Protein, Proteinsalzen, und Kombinationen davon.

8. Verfahren nach Anspruch 7, wobei die Polyphenol-Gelatine-Komplex-Masse Polyphenol und Gelatine in einem Gewichtsverhältnis von Polyphenol zu Gelatine von 0,2:1 bis 0,8:1 umfasst.

9. Verfahren nach Anspruch 7 oder 8, wobei das Protein und die Proteinsalze aus Milch- oder Sojabohnenmaterialien gewonnen sind.

10. Verfahren nach Ansprüchen 7 bis 9, wobei das Süßwarenprodukt während Kauens unter Mundbedingungen in 2 bis 10 Minuten zerfällt.

11. Verfahren nach Ansprüchen 7 bis 10, wobei der Polyphenol-Gelatine-Komplex auf einer Mischtemperatur von 35-55 °C hergestellt wird.

12. Verfahren nach Ansprüchen 7 bis 11, wobei das Süßwarenprodukt 10 - 60 Gew.-% Polyphenol-Komplex enthält.

13. Verfahren nach Ansprüchen 7 bis 12, wobei das Süßwarenprodukt weiter eine zerfallende Menge eines Bestandteils umfasst, der aus der Gruppe ausgewählt ist, bestehend aus Fetten, Ölen, Lecithin, Emulgatoren, Orbital, Maltitol, Isomalt, Xylitol, Zucker, Calciumcarbonat, und einer Kombination davon.

## Revendications

1. Produit de confiserie, comprenant:
a. 5-95% en poids du complexe polyphénol-gélatine contenant jusqu'à 60% en poids d'eau sur la base du polyphénol et de la gélatine solides, ayant un rapport pondéral polyphénol / gélatine de 0,2:1 à 0,8:1; et
b. 10-95% en poids d'agent gonflant choisi dans le groupe constitué par l'érythritol, le mannitol, les gommes hydrocolloïdes, l'amidon modifié, la pectine, l'inuline, une protéine, les sels de protéine et leurs combinaisons;
dans lequel le complexe polyphénol-gélatine est préparé en mélangeant de la gélatine sèche avec une solution de polyphénol et d'eau; et
dans lequel le produit de confiserie se désintègre pendant la mastication dans la bouche en 2 à 40 minutes.

2. Produit de confiserie selon la revendication 1, dans lequel la protéine et les sels de protéine sont dérivés de matières de lait ou de soja.

3. Produit de confiserie selon la revendication 1, dans lequel le produit de confiserie se désintègre pendant la mastication dans la bouche en 2 à 10 minutes.

4. Produit de confiserie selon l'une quelconque des revendications précédentes, dans lequel le complexe polyphénol-gélatine est réalisé à une température de mélange de 28-90°C.

5. Produit de confiserie selon l'une quelconque des revendications précédentes, dans lequel le produit de confiserie contient 10-60% en poids du complexe polyphénol-gélatine.

6. Produit de confiserie selon l'une quelconque des revendications précédentes, comprenant en outre une quantité désintégrante d'un ingrédient choisi dans le groupe constitué par les graisses, les huiles, la lécithine, les émulsifiants, l'orbitale, le maltitol, l'isomalt, le xylitol, le sucre, le carbonate de calcium et une combinaison de ceux-ci.

7. Procédé de fabrication d'un produit de confiserie comprenant les étapes consistant à:
a. faire une solution polyphénol-eau en mélangeant du polyphénol avec de l'eau;
b. faire une masse du complexe polyphénol-gélatine en mélangeant la solution polyphénol-eau avec de la gélatine sèche dans un mélangeur à 28-90°C;
c. faire une masse de confiserie en mélangeant un agent gonflant dans la masse du complexe polyphénol-gélatine; et
d. former des pièces de confiserie à partir de la masse de confiserie.
dans lequel ledit agent gonflant est choisi dans le groupe constitué par l'érythritol, le mannitol, les gommes hydrocolloïdes, l'amidon modifié, la pectine, l'inuline, une protéine, les sels de protéine et leurs combinaisons.

8. Procédé selon la revendication 7, dans lequel la masse du complexe polyphénol-gélatine comprend du polyphénol et de la gélatine dans un rapport de polyphénol à la gélatine de 0,2:1 à 0,8:1 en poids.

9. Procédé selon la revendication 7 ou 8, dans lequel la protéine et les sels de protéine sont dérivés de matières de lait ou de soja.

10. Procédé selon la revendication 7 à 9, dans lequel le produit de confiserie se désintègre pendant la mastication dans la bouche en 2 à 10 minutes.

11. Procédé selon la revendication 7 à 10, dans lequel le complexe polyphénol-gélatine est réalisé à une température de mélange de 35-55°C.

12. Procédé selon la revendication 7 à 11, dans lequel le produit de confiserie
contient 10-60% en poids du complexe polyphénol.

13. Procédé selon la revendication 7 à 12, dans lequel le produit de confiserie
comprend en outre une quantité désintégrante d'un ingrédient choisi dans le groupe constitué par les graisses, les huiles, la lécithine, les émulsifiants, l'orbitale, le maltitol, l'isomalt, le xylitol, le sucre, le carbonate de calcium et une combinaison de ceux-ci.
